# EUROPEAN PATENT APPLICATION

(11) **EP 4 198 182 A1**
(43) Date of publication of application: **21.06.2023**
(21) Application number: 21216045.1
(22) Date of filing: 20.12.2021
(51) Int. Cl.: D03D 9/00, D03D 15/43, D03D 15/46, B32B 5/08

(54) **WOVEN FABRIC, VACUUM INDUCED RESIN INFUSION PROCESS AND FIBRE REINFORCED COMPOSITE**

(71) Applicant: Vitrulan Composites Oy, 50100 Mikkeli (FI)
(72) Inventor: HUOPONEN, Petro, 50180 Mikkeli (FI); FJÄLLSTRÖM, Maija, 36200 Kangasala (FI)
(74) Representative: Pfenning, Meinig & Partner mbB

(57) **Abstract**

The present invention relates to a woven fabric for the manufacture of fibre reinforced composites having an area weight from 100 to 200 g/m² which comprises unidirectional reinforcing fibres, carbon fibres and flow passages forming elements arranged in warp and/or weft direction, and, optionally additives. The flow passages forming elements are arranged transverse to the reinforcing fibres and the carbon fibres forming flow passages at the side of the flow passages forming elements. Moreover, the present invention relates to a vacuum induced resin infusion process for forming a fibre reinforced composite from such woven fabric as well as the fibre reinforced composite.

## Description

The present invention relates to a woven fabric for the manufacture of fibre reinforced composites having an area weight from 100 to 200 g/m² which comprises unidirectional reinforcing fibres, carbon fibres and flow passages forming elements arranged in warp and/or weft direction, and, optionally additives. The flow passages forming elements are arranged transverse to the reinforcing fibres and the carbon fibres forming flow passages at the side of the flow passages forming elements. Moreover, the present invention relates to a vacuum induced resin infusion process for forming a fibre reinforced composite from such woven fabric as well as the fibre reinforced composite.

There has been a need in the market for wind turbine rotor blades for a fabric to be placed between pultruded carbon profiles of the spar constructions of the blades. The fabric does not necessarily need to participate much in providing stiffness or other mechanical characteristics to the blade, but it needs to be electrically conductive in different directions. This is to provide an electrically conductive path for e.g. lightning strike current protection, as explained in Madsen S., Carloni, L., Lightning exposure of Carbon Fiber Composites in wind turbine blades, Proceedings of the Nordic Insulation Symposium DOI:10.5324/nordis.v0i24.2293. Also, there is a need for transversal permeability (based on the permeability constant K22) to ensure good wetting and air removal between the spar cap carbon laminates.

Alternatively, the main spar can also be constructed out of hybrid glass/carbon unidirectional (UD) fabrics or hybrid UD pultrusion laminates instead of pultruded carbon laminates but also in this case the main purpose of the interlayer fabric remains the same.

The use of flow fabrics in composites has been known for a long time and multiple solutions exist. US 5,484,642 teaches the use of woven fabrics with substantially round threads, constructed of helically twisted multifilament yarns, for forming flow ducts. Similarly, WO 2020/182908 A1 teaches the application non-reinforcing twisted multifilaments with modulus less than 10GPa in stitched reinforcement for forming resin flow passages. Yet EP 3 174 704 A1 describe the use of infusion promoting layer that is a fabric comprising a plurality of twisted yarns in wind turbine blade.

The existing conductive solutions for interlayer fabrics on the market are based on low weight carbon biaxial fabrics (e.g. CARBON BIAX 300 45/45) with 150g/m² ply weights. In this case the main flow properties are achieved by using a high tex stitch yarn in biaxial fabric to ensure enough free thickness between laminate layers. The drawback in using such carbon biaxial fabrics is apparent due to the high amount of carbon fibres in these directions of the blade spar. Regarding to the conductivity the high amount of carbon fibres results in such a high conductivity which completely exceeding the necessary requirements for such rotor blades. Moreover, this solution has a higher weight and results in higher production costs.

Also, EP 3 419 816 A1 teaches the use of flow layers interleaved with a dry reinforcement stack. Their flow layer can comprise filaments or bundles of second material, which is electrically conductive. They however teach that the second material is placed in an angle between 15 and 75 degrees with respect to the transverse direction to ensure the good electrical contact. This arrangement is however difficult to manufacture and in practice the second material needs to be added in a second step.

It was therefore an object of the present invention to provide a fibre reinforced composite based on a woven fabric having a reduced weight and a sufficient electrical conductivity and is easy and cost-effective to manufacture.

This problem is solved by the woven fabric with the features of claim 1, the vacuum induced resin infusion process of claim 13 and the fibre reinforced composite of claim 15. The further dependent claims mention preferred embodiments.

According to the present invention, a woven fabric for the manufacture of fibre reinforced composites having an area weight from 50 to 300 g/m² is provided comprising or consisting of:
a) 30 to 60% by weight of unidirectional reinforcing fibres arranged in warp and/or weft direction,
b) 20 to 60 % by weight of electrical conductive fibres arranged in warp and/or weft direction,
c) 5 to 20 % by weight flow passages forming elements arranged in warp and/or weft direction, and
d) 0 to 5 % by weight of at least one additive,
wherein the quantity proportions of components a) to d) add up to 100 % by weight.

The flow passages forming elements are arranged substantially transverse to the reinforcing fibres and the electrical conductive fibres forming flow passages at the side of the flow passages forming elements. A substantially transverse arrangement of the reinforcing fibres and the electrical conductive fibres means in the context of the present invention the fibres are arranged with an angle in a range from 75° to 105°, preferably 80° to 100° and more preferably from 85° to 95°. In a particular preferred embodiment the reinforcing fibres and the electrical conductive fibres are arranged transverse to each other.

The present invention is based on the idea that instead of using only electrical conductive fibres like carbon fibers, the electrical conductive fibres are substituted by fibres of other materials which surprisingly allow a synergism of good flow characteristics, a sufficient electrical conductivity, good processability of the woven fabric and good interlaminar shear properties.

It is preferred that the woven fabric has an area weight between 70 to 250 g/m², preferably 100 to 200 g/m².

It is preferred that the flow passages forming elements are selected from the group consisting of
- monofilament yarn, preferably polymeric monofilaments and more preferably selected from the group consisting of polyethylene terephthalate (PET), polypropylene, polybutylene terephthalate, polyamide (PA),
- glass yarn,
- carbon yarn,
- twisted yarn,
- covered yarn and
- combinations thereof.

According to a preferred embodiment the flow passages forming elements have a diameter of 50 to 350 µm, more preferably a diameter of 120 to 200 µm.

It is preferred that the flow passages forming elements are positioned in a distance of 2 to 8 mm from each other, more preferably 3 to 5 mm from each other.

The flow passages forming elements preferably comprise bundles of at least 1 and at most 5 monofilaments.

The reinforcing fibres are preferably selected from the group consisting of glass fibres, preferably flat glass fibres, or ceramic fibres, and combinations thereof. It is preferred that the reinforcing fibres have a diameter of 4 to 30 µm, more preferably of 10 to 20 µm. Moreover, the reinforcing fibres are preferably present in the woven fabric as rovings.

It is preferred that the electrical conductive fibres are selected from the group consisting of carbon fibres, recycled carbon fibres, metal wires, glas yarn wrapped around with metal wires, metal coated synthetic yarns like polyamide, polyester, polypropylene or other synthetic yarns and combinations thereof. The electrical conductive fibres have preferably a diameter of 4 to 30 µm, more preferably of 5 to 20 µm, and even more preferably of 6 to 10 µm. The carbon fibres are preferably recycled carbon fibres. Moreover, it is preferred that the electrical conductive fibres are present as rovings.

It is preferred that the additive is an adhesion promoter to optimise the adhesion between the fabric and the later used resin. Also a bi-component/low melt yarn can be used to increase the stability of the fabrics by creating a bonding between longitudinal and transversal fiber directions.

According to a preferred embodiment, the woven fabric comprises
a) 30 to 75 % by weight of unidirectional reinforcing fibres arranged in warp direction,
b) 20 to 50 % by weight of carbon fibres arranged in warp direction and
c) 2 to 10 % by weight of flow passages forming elements arranged in weft direction,
wherein the quantity proportions of components a) to d) add up to 100 % by weight.

The woven fabric has preferably a resistance in the range of < 20 ohm in warp and/or weft direction, preferably < 10 ohm, more preferably < 5 ohm measured on a sample of 12cm x 12 cm.

According to the present invention also a vacuum induced resin infusion process for forming a fibre reinforced composite is provided which comprises or consists of the following steps:
a) providing a woven fabric of any of claims 1 to 12,
b) enclosing the woven fabric within a substantially air impervious casing having at least one means for applying a vacuum and at least one means for supplying a curable resin to the casing,
c) applying a vacuum to the casing via the at least one means for applying the vacuum and the at least one means,
d) introducing the curable resin via the at least one means for supplying a curable resin to the casing and
e) curing the resin to form the fibre reinforced composite.

It is preferred that the at least one means for applying a vacuum and the at least one means for supplying a curable resin to the casing are located on opposite sides of the casing.

According to the present invention also a fibre reinforced composite is provided which comprises the woven fabric as described above and an infused and cured resin.

With reference to the following figures and examples, the subject-matter accordingto the present invention is intended to be explained in more detail without wishing to restrict said subject-matter to the specific embodiments shown here.
- Fig. 1: is a diagram showing the flow rate of the fabric of the comparative example 1
- Fig. 2: is a diagram showing the flow rate of the fabric of the comparative example 2

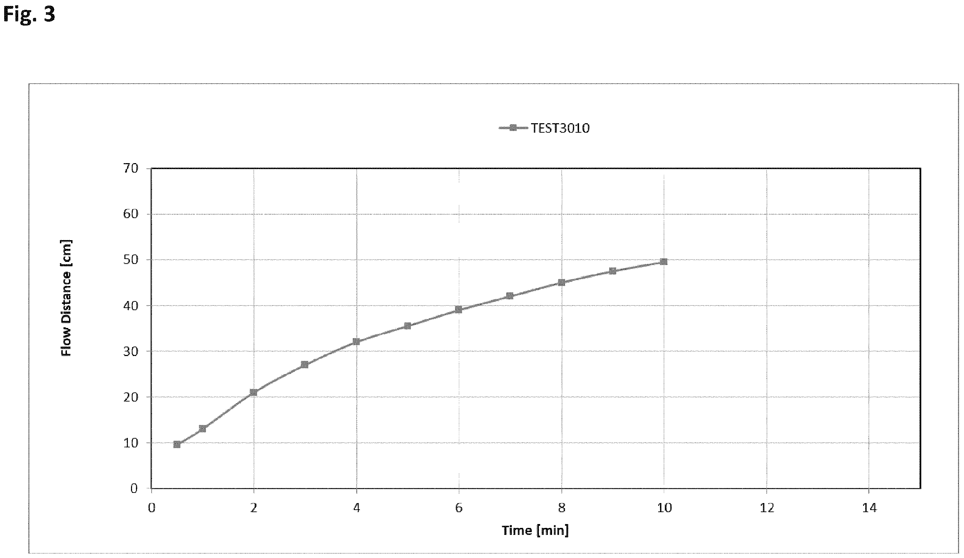

- Fig. 3: is a diagram showing the flow rate of the fabric of the example 1
- Fig. 4: a top view of a fabric according to the present invention
- Fig. 5: is a diagram showing the flow rate of the fabric of the example 2

### Comparative Example 1

The starting point was based on glass warp fabric which was first evaluated for transversal flow properties. At this stage there no carbon fibers were included.

The tested fabric (TEST2599) had the following construction:

### Weave pattern: Plain weave

Table 1 mentions the fibres used in comparative example 1.

**Table 1**

| **Orientation** | **TEX** | **Nominal weight [g/m²]** | **Fiber Type** |
|---|---|---|---|
| **Warp** | 200 | 94 | E-Glass |
| **Weft** | 130 | 58 | PET monofilament (Ø 0.35mm) |

The total weight of the fabric was 152 g/m².

### Infusion Setup

The infusion properties were tested with the following setup:
- Size of the preform 400x600 mm (width x length)
- 10 layers tested in 90°-direction (weft direction = K22)

### Resin system

The following resin and initiator were used:

| | |
|---|---|
| Resin: | Ashland AME 6001 INF-135 (VE) |
| Initiator: | Norox MCP-75 1,5% |

### Results

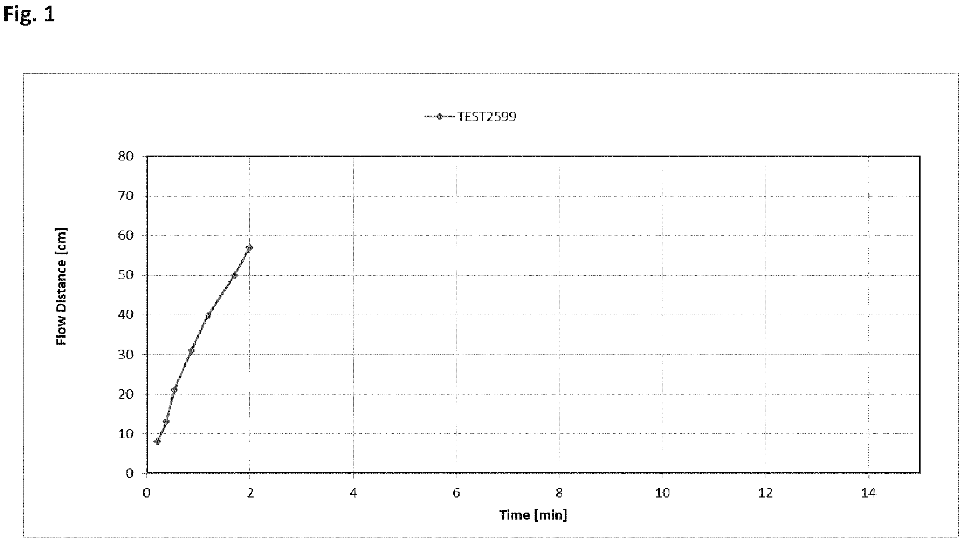

Fig. 1 shows the flow rate of the fabric of the comparative example 1 as the dependence of the flow distance from the time. It was observed that the fabric of the comparative example 1 showed a far too high flow rate. It was concluded that the diameter of monofilament yarn used for flow enhancement has to be reduced.

### Comparative example 2

Further infusions were made to optimize the flow properties and resin consumption. The use of 0.25 mm and 0.14 mm diameter monofilament was tested for flow properties. The next fabric was made with a lower filament diameter.

The second tested fabric (TEST2582) had the following construction:

### Weave pattern: Plain weave

Table 2 mentions the fibres used in comparative example 2.

**Table 2**

| **Orientation** | **TEX** | **Nominal weight [g/m²]** | **Fiber Type** |
|---|---|---|---|
| **Warp** | 200 | 94 | E-Glass |
| **Weft** | 650 | 29 | PET monofilament (Ø 0.25mm) |

The total weight of the fabric was 123 g/m².

### Infusion Setup

The infusion setup and other parameters are the same as in the first infusion setup (comparative example 1).

### The Results

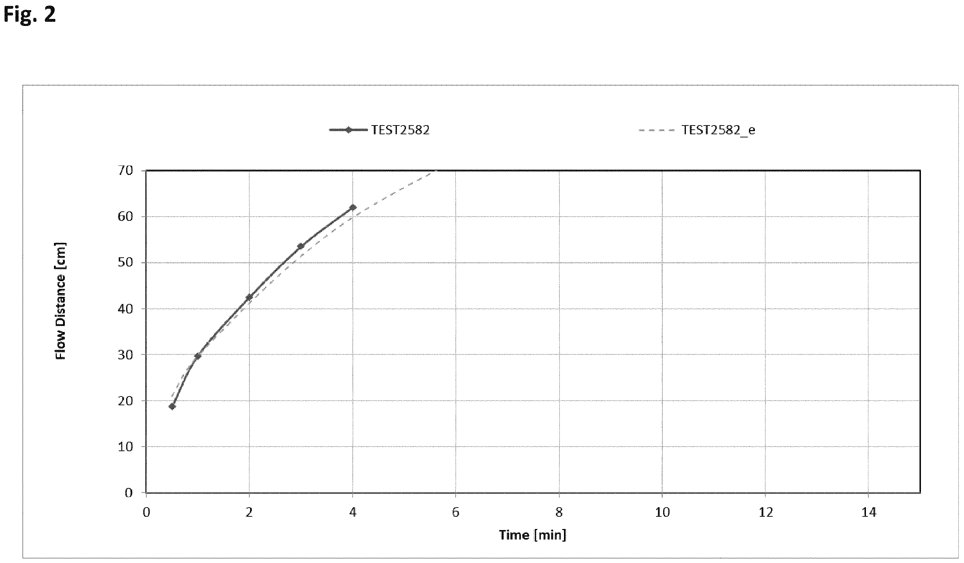

Fig. 2 shows the flow rate of the fabric of the preliminary test as the dependence of the flow distance from the time. It was observed that the fabric of comparative example 2 has is a lower flow rate than comparative example 1 which, however, was still too high. Hence, there was still a need to lower the flow rate.

### Example 1

In a further experiment carbon fibres were used in weft direction.

The carbon in weft direction was chosen to be 3K as it is of same tex as the warp direction. Using a higher tex would generate bumps on fabric. The weft monofilament area weight is only 5 g/m² and should provide enough stability to the fabric and infusibility together with additional carbon.

The tested fabric (TEST3010) has the following construction:

### Weave pattern: Plain weave

Table 3 mentions the fibres used in example 1.

**Table3**

| **Orientation** | **TEX** | **Nominal weight [g/m²]** | **Fiber Type** |
|---|---|---|---|
| **Warp** | 200 | 94 | E-Glass |
| **1^{st} Weft** | 21 | 6 | PET monofilament (Ø 0.14 mm) |
| **2^{nd} Weft** | 200 | 36 | 3K Carbon |

The total weight of the fabric was 123 g/m².

### Infusion Setup

The infusion setup and other parameters are the same as for comparative examples 1 and 2.

### The Results

The permeability of the fabric was improved compared to the comparative examples. 27% (36g/m²) of the fabric weight refers to carbon fibers which was arranged in weft direction.

### Example 2

Further experiments were conducted with different fiber diameters of monofilament, the correct flow level (around 10 minutes for 50cm width) was estimated to be reached with 140µm fiber diameter. In this case also the warp & weft-oriented carbon (3K) was added. The addition of carbon in warp direction does not seem to influence much on the flow characteristics of the fabric. The weft direction carbon adds a bit of thickness to the fabric and thereby enhances the flow properties.

The tested fabric (TEST2915) has the following construction:

### Weave pattern: Plain weave

Table 4 mentions the fibers used in example 2.

**Table4**

| **Orientation** | **TEX** | **Nominal weight [g/m²]** | **Fiber Type** |
|---|---|---|---|
| **1^{st} Warp** | 200 | 75 | E-Glass |
| **2^{nd} Warp** | 200 | 19 | 3K Carbon |
| **1^{st} Weft** | 21 | 6 | PET monofilament (Ø 0.14mm) |
| **2^{nd} Weft** | 200 | 36 | 3K Carbon |

The total weight of the fabric was 136 g/m².

### Infusion Setup

The infusion properties are tested with the following setup:
- Size of the preform 400x600 mm (width x length)
- 10 layers tested in 90°-direction (weft direction)

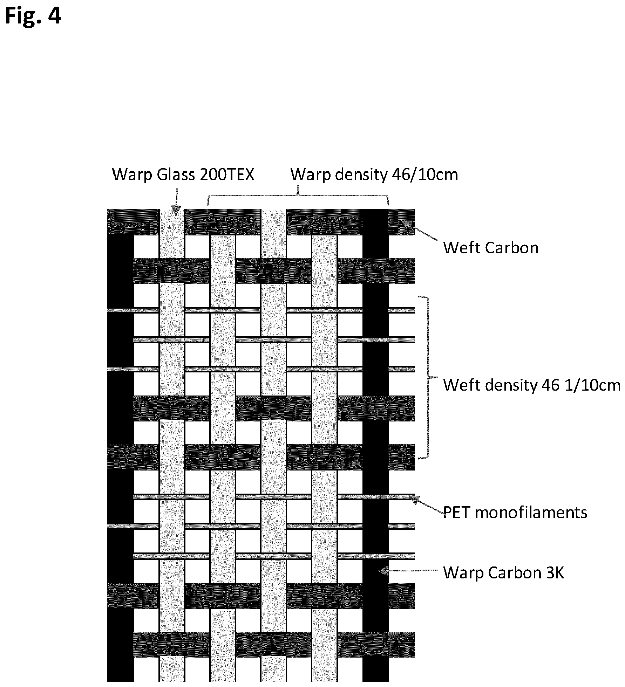

The fabric construction is shown in Fig. 4.

### Resin system

The following resin and initiator were used:

| | |
|---|---|
| Resin: | Ashland AME 6001 INF-135 (VE) |
| Initiator: | Norox MCP-75 1,5% |

### The Results

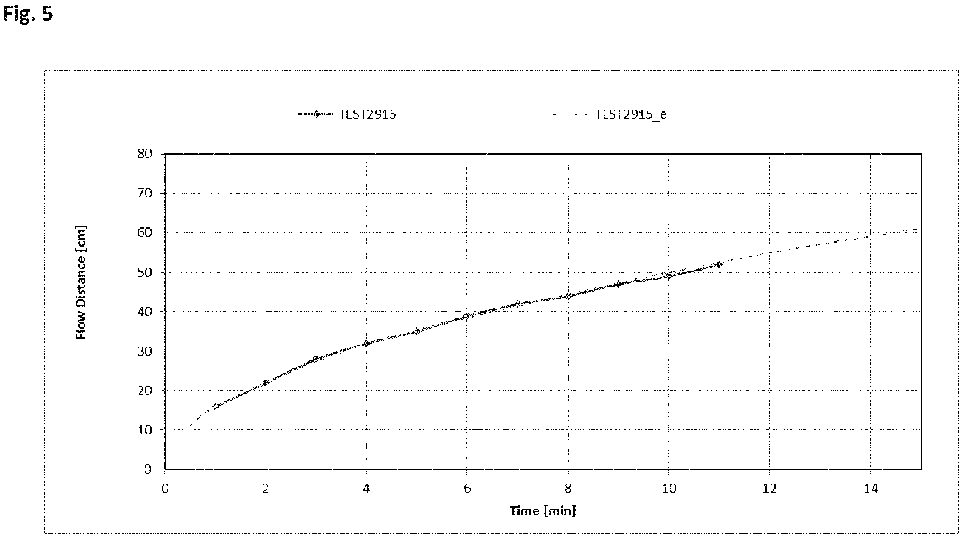

The infusion result was seen very interesting as it was fast enough and reached with rather low areal weight of fabric (136 g/m²) (s. Fig. 5).

The desired level of infusibility was reached and the conductivity of the material was found to be in target range. The conductivity can also be rather easily adapted by changing glass rovings in warp to carbon fibers or by changing monofilaments in weft to carbon fibres. The changes in warp had minimal effect on flow properties whereas the change in weft must be evaluated case by case.

## Claims

1. A woven fabric for the manufacture of fibre reinforced composites having an area weight from 50 to 300 g/m² comprising or consisting of
a) 30 to 60 % by weight unidirectional reinforcing fibres arranged in warp and/or weft direction,
b) 20 to 60 % by weight electrical conductive fibres arranged in warp and/or weft direction,
c) 5 to 20 % by weight flow passages forming elements arranged in warp and/or weft direction, and
d) 0 to 5% by weight of at least one additive,
the quantity proportions of components a) to d) add up to 100 % by weight and
wherein the flow passages forming elements are arranged substantially transverse to the reinforcing fibres and forming flow passages at the side of the flow passages forming elements.

2. The woven fabric of claim 1,
**characterized in that** the woven fabric has an area weight between 70 to 250 g/m², preferably 100 to 200 g/m².

3. The woven fabric of any of claims 1 or 2,
**characterized in that** the flow passages forming elements are selected from the group consisting of
• monofilament yarn, preferably polymeric monofilaments and more preferably selected from the group consisting of polyethylene terephthalate (PET), polypropylene, polybutylene terephthalate, polyamide (PA),
• glass yarn,
• carbon yarn
• twisted yarn,
• covered yarn and
• combinations thereof.

4. The woven fabric of any of claims 1 to 3,
**characterized in that** the flow passages forming elements have a diameter of 50 to 350 µm, preferably of 120 to 200 µm.

5. The woven fabric of any of claims 1 to 4,
**characterized in that** the flow passages forming elements are positioned in a distance of 2 to 8 mm from each other, preferably 3 to 5 mm from each other.

6. The woven fabric of claim 1 to 5,
**characterized in that** flow passages forming elements comprise bundles of at least 1 and at most 5 monofilaments.

7. The woven fabric of any of claims 1 to 6,
**characterized in that** the reinforcing fibres are selected from the group consisting of glass fibres, preferably flat glass fibres, or ceramic fibres, and combinations thereof, preferably with a diameter of 4 to 30 µm, more preferably of 10 to 20 µm, wherein the reinforcing fibres are preferably present as rovings.

8. The woven fabric of any of claims 1 to 7,
**characterized in that** the electrical conductive fibres are selected from the group consisting of carbon fibres, recycled carbon fibres, metal wires, glas yarn wrapped around with metal wires, metal coated synthetic yarns like polyamide, polyester, polypropylene or other synthetic yarns and combinations thereof,
wherein that the electrical conductive fibres have preferably a diameter of 4 to 30 µm, more preferably of 5 to 20 µm, and even more preferably of 6 to 10 µm.

9. The woven fabric of any of claims 1 to 8,
**characterized in that** the electrical conductive fibres are present as rovings.

10. The woven fabric of any of claims 1 to 9,
**characterized in that** the additive is selected from the group consisting of
• at least one adhesion promoter, preferably as a coating of the fabric, to optimise the adhesion between the fabric and the later used resin,
• at least one bi-component yarn for a mechanical connection between transversal and longitudinal oriented fibers and
• combinations thereof.

11. The woven fabric of any of claims 1 to 10,
**characterized in that** the woven fabric comprises
a) 30 to 75% by weight of unidirectional reinforcing fibres arranged in warp direction,
b) 20 to 50 % by weight of carbon fibres arranged in warp and/or weft direction and
c) 2 to 10 % by weight of flow passages forming elements arranged in weft direction
the quantity proportions of components a) to c) add up to 100 % by weight.

12. The woven fabric of any of claims 1 to 11,
**characterized in that** the woven fabric has a resistance in the range of < 20 ohm in warp and/or weft direction, preferably < 10 ohm, more preferably < 5 ohm measured on a sample of 12cm x 12 cm.

13. A vacuum induced resin infusion process for forming a fibre reinforced composite comprising the following steps:
a) providing a woven fabric of any of claims 1 to 12,
b) enclosing the woven fabric within a substantially air impervious casing having at least one means for applying a vacuum and at least one means for supplying a curable resin to the casing,
c) applying a vacuum to the casing via the at least one means for applying the vacuum and the at least one means,
d) introducing the curable resin via the at least one means for supplying a curable resin to the casing and
e) curing the resin to form the fibre reinforced composite.

14. The process of claim 13,
**characterized in that** the at least one means for applying a vacuum and the at least one means for supplying a curable resin to the casing are located on opposite sides of the casing.

15. A fibre reinforced composite comprising the woven fabric of any of claims 1 to 12 and an infused and cured resin.
